**Europäisches Patentamt**

**European Patent Office**

**Office européen des brevets**

(19)

(11) Veröffentlichungsnummer: **0 111 361 B1**

# EUROPÄISCHE PATENTSCHRIFT

(12)

(45) Veröffentlichungstag der Patentschrift:
**19.11.87**

(51) Int. Cl.⁴: **G 01 K 7/22**

(21) Anmeldenummer: **83201674.5**

(22) Anmeldetag: **29.11.83**

(54) **Symmetrischer Temperatursensor.**

(30) Priorität: **07.12.82 DE 3245178**

(43) Veröffentlichungstag der Anmeldung:
**20.06.84 Patentblatt 84/25**

(45) Bekanntmachung des Hinweises auf die Patenterteilung:
**19.11.87 Patentblatt 87/47**

(84) Benannte Vertragsstaaten:
**DE FR GB NL**

(56) Entgegenhaltungen:
EP - A - 0 028 387
EP - A - 0 061 550
DE - A - 3 010 718
DE - A - 3 041 818
FR - A - 2 123 179
US - A - 2 953 759
US - A - 3 582 830
US - A - 3 936 789

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **FR GB NL**

(72) Erfinder: **Sauermann, Heinz, Dipl.-Phys., Rotdornstieg 15, Halstenbek (DE)**

(74) Vertreter: **David, Günther M. et al, Philips Patentverwaltung GmbH Wendenstrasse 35 Postfach 10 51 49, D-2000 Hamburg 1 (DE)**

## Beschreibung

Die Erfindung betrifft einen elektrisch symmetrischen Temperatursensor mit zwei in einen mit einer Isolierschicht bedeckten Halbleiterkörper vom einen Leitungstyp eingebrachten und mit sich durch Fenster in der Isolierschicht erstreckenden Anschlusskontakten versehenen, hochdotierten Zonen vom gleichen Leitungstyp, zwischen denen ein temperaturabhängiger Widerstand gebildet ist.

Ein Temperatursensor dieser Art ist aus EP-A-0 028 387 bekannt. Bei diesem Temperatursensor liegen jedoch die Anschlusskontakte beide auf derselben Seite des Halbleiterkörpers, damit das Ausbreitungswiderstandsprinzip ausgenutzt werden kann. Dies hat jedoch den Nachteil, dass während des Betriebes auf die auftretenden Temperaturunterschiede zurückgehende mechanische Verspannungen auftreten können, welche den Widerstandswert verfälschen, und dass für den Einbau des Halbleiterkörpers eines solchen Temperatursensors in ein Gehäuse nur Techniken angewendet werden können, wie sie für planare Halbleiterbauelemente gebräuchlich sind.

Aus US-A-3 582 830 ist es bekannt, bipolare Halbleiterbauelemente mit einander gegenüber an einander gegenüberliegenden Seiten des Halbleiterkörpers liegenden Anschlusskontakten auszubilden.

Weiter ist aus DE-A-3 041 818 ein unsymmetrischer Halbleiter-Temperatursensor bekannt, bei dem die beiden hochdotierten Zonen an einander gegenüberliegenden Seiten des Halbleiterkörpers liegen.

Aus EP-A-0 061 550 ist es schliesslich bekannt einen Thermistor, der aus einer an den einander gegenüberliegenden Flächen mit Kontakten versehenen Scheibe besteht, in Glas einzubetten.

Der Erfindung liegt die Aufgabe zugrunde, einen symmetrischen Temperatursensor der oben genannten Art so auszubilden, dass die Widerstandskonstanz verbessert wird und er mit geringem Aufwand auch in andere Gehäuse, insbesondere in Glasgehäuse, wie sie für Gleichrichterdioden üblich sind, eingebaut werden kann.

Die genannte Aufgabe wird erfindungsgemäss dadurch gelöst, dass die Zonen vom gleichen Leitungstyp einander gegenüber, an einander gegenüberliegenden Seiten des Halbleiterkörpers angeordnet sind und dass der Durchmesser der Anschlusskontakte kleiner ist als der Durchmesser der Fenster in der Isolierschicht.

Ein solcher, nicht nur elektrisch sondern auch von seiner Gestalt her symmetrischer Temperatursensor kann nun ohne Schwierigkeiten in die für Dioden üblichen Glasgehäuse eingebaut werden.

Weitere Vorteile sind darin zu sehen, dass dank des auch mechanisch symmetrischen Aufbaus geringere mechanische Verspannungen auftreten und so die Widerstandskonstanz besser ist und dass grössere Kontaktzonen und damit eine höhere Strombelastbarkeit möglich ist.

Der Vollständigkeit halber sei noch auf folgenden Stand der Technik verwiesen:

Aus US-A-2 953 759 ist ein Widerstand bekannt, der aus einem an seinen beiden Endflächen mit Kontakten versehenen Stab aus Halbleitermaterial besteht.

Aus DE-A-3 010 718 ist es bekannt, eine als Temperatursensor dienende Halbleiterdiode mit einem Glasgehäuse zu versehen. Aus US-A-3 936 789 und FR-A-2 123 179 sind Temperatursensoren bekannt, die durch Widerstandszonen in einem Halbleiterkörper gebildet sind, die zwischen jeweils zwei, an derselben Fläche des Halbleiterkörpers liegenden hochdotierten Zonen ausgebildet sind.

Ein Ausführungsbeispiel der Erfindung ist anhand der beigefügten Zeichnungen näher erläutert. Es zeigen:

Fig. 1 den schematisch dargestellten Aufbau eines symmetrischen Temperatursensors ohne Gehäuse

Fig. 2 einen in ein Glasgehäuse eingebauten Temperatursensor nach Figur 1.

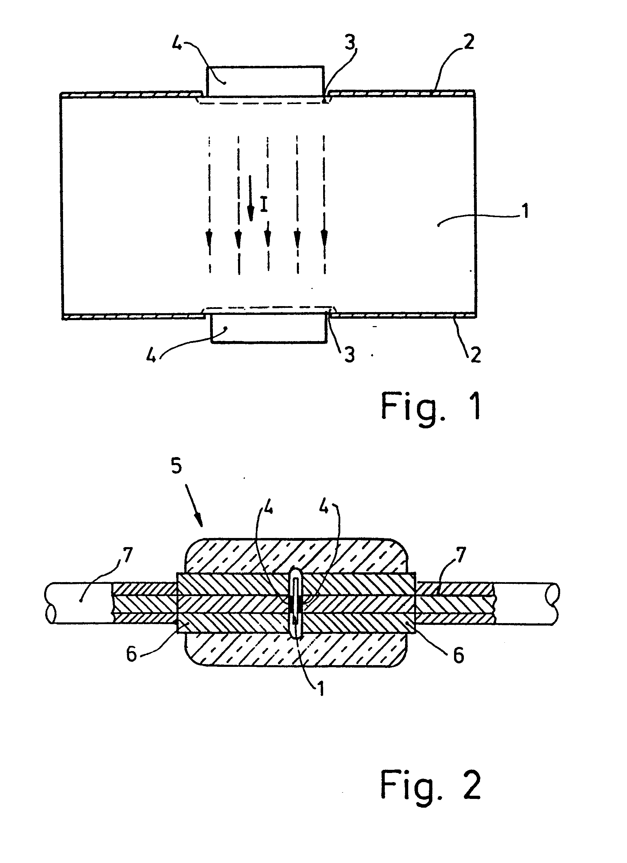

Figur 1 zeigt (nicht massstäblich) einen Halbleiterkörper 1 der Dicke d, dessen Oberseite und Unterseite mit einer Maskierungsschicht 2 bedeckt ist. In den beiden Maskierungsschichten befinden sich Fenster unter denen im Halbleiterkörper 1 vom einen Leitungstyp jeweils eine hochdotierte Zone 3 vom gleichen Leitungstyp liegt. Beide Zonen 3 tragen Anschlusskontakte 4 aus Metall.

Bei einem so aufgebauten symmetrischen Temperatursensor bewirkt eine Gleichspannung zwischen den beiden Anschlusskontakten 4 einen Strom I, dessen Grösse unabhängig von der Polarität der angelegten Spannung ist. Dabei ergibt sich ein Widerstand R zwischen den beiden Anschlusskontakten (ohne Berücksichtigung von Streueffekten) von:

$$R = \frac{4(d-2d_K)\,S}{(D+2d_K)^2} = \frac{4(d-2d_K)}{(D+2d_K)^2 \pi \cdot e \cdot \mu \cdot N}$$

bedeuten:

D     Durchmesser der Zonen 3
d     Dicke des Halbleiterkörpers 1
$d_K$    Tiefe der Zonen 3
N     Dotierungskonzentration in den Zonen 3
e     Elementarladung
S     Spezifischer Widerstand des Halbleiterkörpers 1 Ladungsträgerbeweglichkeit

In dem für einen Temperatursensor aus Silicium üblichen Temperaturmessbereich von –55°C bis +155°C ist in dieser Beziehung nur die Beweglichkeit $\mu$ von der Temperatur abhängig.

Ein so aufgebauter symmetrischer Temperatursensor kann wie folgt hergestellt werden:

Um eine möglichst grosse Temperaturabhängigkeit der Beweglichkeit zu erzielen, wird als Grundmaterial für den Halbleiterkörper N-Silicium gewählt mit einem spezifischen Widerstand von s = 7 Ohm·cm. Um eine möglichst geringe Streuung zu haben, wird neutronentransmutiertes Silicium gewählt.

Der Halbleiterkörper hat eine Dicke d von 310 μm. Die beiderseitig polierte bzw. geätzte Halbleiterscheibe wird zunächst auf der Vorder- und der Rückseite mit einer Diffusionsmaske 2 aus SiO$_2$ oder Si$_3$N4 bedeckt. In dieser Maske werden dann Fenster (rund) mit einem Durchmesser D mittels eines doppelseitigen Photolithographieverfahrens so in die Maskierungsschicht 2 geätzt, dass sie einander genau gegenüberliegen. Durch die Fenster werden dann in dem Halbleiterkörper durch Kontaktdiffusion mit Phosphor bis zu einer Tiefe d$_K$ hochdotierte Zonen 3 eingebracht. Beträgt der Lochdurchmesser D in den Maskierungsschichten 2 z.B. 160 μm und die Diffusionstiefe d$_K$ der Zonen 3 3 μm, so ergibt sich mit den obengenannten Werten für den Halbleiterkörper ein Widerstand R von 1000 Ohn bei 25°C. Die Dotierungskonzentration in den Zonen 3 ist >10$^{19}$ Atome/cm$^3$.

Anschliessend werden die Zonen 3 mit Anschlusskontakten 4 aus z.B. Titan/Silber versehen. Die Höhe dieser Kontakte beträgt z.B. 35 μm.

Um das Auftreten mechanischer Verspannungen und damit verbundene Widerstandsänderungen möglichst zu vermeiden, ist es zweckmässig, den Durchmesser der Anschlusskontakte kleiner als den Durchmesser der Fenster in den Maskierungsschichten 2 zu wählen und gegebenenfalls die Maskierungsschichten zu entfernen.

Die Halbleiterscheibe wird dann schliesslich in einzelne Chips von 0,5×0,5 mm$^2$ zerteilt. Bei einer solchen Chipgrösse bei der die Längsabmessungen gross gegenüber dem Durchmesser der Zonen 3 ist, erfolgt der Stromtransport praktisch nur im Kristallinneren und Oberflächeneffekte, die ebenfalls Einfluss auf die Stabilität des Temperatursensors haben könnten, werden ausgeschlossen.

Figur 2 zeigt einen so hergestellten, in ein Glasgehäuse (Standard-Diodengehäuse DO-34) eingebauten Halbleiterkörper. Der Halbleiterkörper 1 mit seinen beiden Anschlusskontakten 4 liegt zwischen zwei mit Anschlussdrähten 7 versehenen Kontaktkörpern 6 aus Cu mit Fe-Kern, die von einer Weichglashülle 8 umgeben sind. Ein Temperatursensor mit einer solchen Umhüllung ist auch gut zum Messen höherer Temperaturen geeignet.

**Patentanspruch**

1. Symmetrischer Temperatursensor mit zwei in einen mit einer Isolierschicht (2) bedeckten Halbleiterkörper vom einen Leitungstyp eingebrachten und mit sich durch Fenster (3) in der Isolierschicht (2) erstreckenden Anschlusskontakten versehenen, hochdotierten Zonen vom gleichen Leitungstyp, zwischen denen ein temperaturabhängiger Widerstand gebildet ist, dadurch gekennzeichnet, dass die Zonen (3) vom gleichen Leitungstyp einander gegenüber an einander gegenüberliegenden Seiten des Halbleiterkörpers (1) angeordnet sind und dass der Durchmesser der Anschlusskontakte (4) kleiner ist als der Durchmesser der Fenster (3) in der Isolierschicht (2).

**Claim**

A symmetrical temperature sensor comprising two highly doped zones of the same conductivity type, which are provided in a semiconductor body coated with an insulating layer (2) of one conductivity type, which are provided with connection contacts extending through windows (3) in the insulating layer (2) and between which a temperature-dependent resistor is formed, characterized in that the zones (3) of the same conductivity type are arranged opposite to each other on opposite sides of the semiconductor body (1) and in that the diameter of the connection contacts (4) is smaller than the diameter of the windows (3) in the insulating layer (2).

**Revendication**

1. Capteur de température symétrique comportant deux zones fortement dopées de même type de conductivité formées dans un corps semiconducteur d'un type de conductivité déterminé recouvert d'une couche isolante (2), et munies de contacts de raccordement s'étendant à travers des fenêtres (3) pratiquées dans la couche isolante (2), zones entre lesquelles est formée une résistance dépendante de la température, caractérisé en ce que les zones (3) de même type de conductivité sont situées en vis-à-vis sur des faces opposées du corps semiconducteur (1) et en ce que le diamètre des contacts de raccordement (4) est inférieur au diamètre des fenêtres (3) pratiquées dans la couche isolante (2).

Fig. 1

Fig. 2